# EUROPÄISCHE PATENTSCHRIFT

(11) **EP 1 750 339 B1**
(45) Veröffentlichungstag und Bekanntmachung des Hinweises auf die Patenterteilung: **08.12.2010**
(21) Anmeldenummer: 06014543.0
(22) Anmeldetag: 13.07.2006
(51) Int. Cl.: H02G 3/06, H02G 3/04

(54) **Hohlkanalanordnung zur Eckumfahrung**
Elbow joint for cable channel
accessoire d'angle pour conduit électrique

(30) Priorität: 05.08.2005 DE 202005012520 U
(43) Veröffentlichungstag der Anmeldung: 07.02.2007
(73) Patentinhaber: Kunststoffwerke-GGK GmbH & Co.KG, 35753 Greifenstein (DE)
(72) Erfinder: Müller, Eckard, 35781 Weilburg (DE)
(74) Vertreter: Böck, Bernhard

(56) Entgegenhaltungen:
- EP-A- 1 207 604
- GB-A- 2 205 200

## Beschreibung

Die Erfindung betrifft eine Hohlkanalanordnung für die Eckumfahrung eines Hohlkanals, insbesondere als Eckumfahrung bei einem Kabelkanal-System, gemäß dem Oberbegriff des Anspruchs 1.

Kabelkanal-Systeme sind bekannt. Daraus gebildete Kabelkanäle kommen beispielsweise, jedoch keineswegs ausschließlich, bei der Elektroinstallation in Gebäuden zum Einsatz. Dabei dienen die Kabelkanäle der Aufnahme und dem Schutz elektrischer Versorgungs- und/oder Steuerleitungen.

Bekannte Kabelkanalsysteme sind oftmals als modulares Baukastensystem mit einer Vielzahl unterschiedlicher Kabelkanalelemente wie auch mit diversen zusätzlichen Steckmodulen ausgeführt, die untereinander jeweils kompatibel sind und praktisch beliebig miteinander kombiniert bzw. zum gewünschten Kabelkanal zusammengesteckt werden können. Derartige Kabelkanäle folgen bei der Verlegung im Allgemeinen dem Verlauf einer Wand oder einer Gebäudedecke. Oftmals müssen Kabelkanäle jedoch auch über mehrere Wände eines Raumes hinweg, oder aber in Form eines Wand-Decken-Übergangs verlegt werden. In beiden Fällen ist es dann erforderlich, dass die bisherige Verlegeebene verlassen wird und dass der Kabelkanal - zumeist unter dem Standard-Gebäudewinkel von 90° abknickend - somit auf die neue Verlegeebene der anschließenden Wand oder Raumdecke übergeführt wird.

Zum Zweck einer derartigen sog. Eckumfahrung sind spezielle, im allgemeinen aus zwei Hälften bestehende Eckelemente bekannt, wobei die Enden der Kabelkanäle beider Verlegeebenen jeweils mit einer der beiden Hälften eines solchen Eckelements verbunden werden. Die bekannten Eckelemente sind dabei jedoch zumeist aus konstruktiv unterschiedlichen Hälften zusammengesetzt, wobei diese unterschiedlichen Hälften im Allgemeinen in Form einer weiblich/männlichen Steckverbindung miteinander verbunden werden.

Aus der GB 2 205 200 A ist eine Hohlkanalanordnung für Innenecken eines Kabelkanalsystems bekannt. Die Hohlkanalanordnung weist zwei Paare von unterschiedlichen Hohlkanalelementen auf, wobei jeweils zwei der Hohlkanalelemente identisch ausgebildet sind. Die jeweils eine Hälfte der Hohlkanalanordnung bildenden unterschiedlichen Hohlkanalelemente können vermittels Schrauben oder alternativ vermittels angeformter Rastelemente fest miteinander verbunden werden.

Derartige Eckelemente für Eckumfahrungen, bei denen jedes der Eckelemente aus zwei unterschiedlichen, separat zu fertigenden Hälften besteht, sind jedoch vergleichsweise aufwändig und teuer. Auch die zur Herstellung derartiger unterschiedlicher Hälften für Eckelemente notwendigen, beiden unterschiedlichen Spritzgusswerkzeuge treiben den Fertigungsaufwand und die Herstellungskosten in die Höhe.

Mit diesem Hintergrund ist es die Aufgabe der vorliegenden Erfindung, eine Hohlkanalanordnung zur Eckumfahrung insbesondere bei Kabelkanälen zu schaffen, mit der sich die beschriebenen Nachteile des Standes der Technik überwinden lassen. Dabei sollen insbesondere Kostenreduktionen sowie eine konstruktive Vereinfachung erreicht werden.

Diese Aufgabe wird durch eine Hohlkanalanordnung nach der Lehre des Anspruchs 1 gelöst.

Bevorzugte Ausführungsformen der Erfindung sind Gegenstand der Unteransprüche.

Die Hohlkanalanordnung gemäß der vorliegenden Erfindung dient in an sich zunächst bekannter Weise zur Eckumfahrung bei einem Hohlkanal, beispielsweise zum Zweck der Verbindung von Kabelkanälen auf unterschiedlichen, zueinander winkligen Verlegeebenen.

Erfindungsgemäß zeichnet sich die Hohlkanalanordnung jedoch dadurch aus, dass sie zwei identische, jeweils im Bereich ihrer gegenseitigen Kontaktoberflächen einander dicht überlappend zur Anlage bringbare Hohlkanalelemente umfasst. Dabei weist die Kontaktoberfläche des Hohlkanalelements Achsensymmetrie auf. Weiter ist das Hohlkanalelement einstückig ausgebildet, und die Hohlkanalanordnung ist mit den zwei Hohlkanalelementen ausbildbar.

Dies bedeutet mit anderen Worten zunächst einmal, dass die erfindungsgemäße Hohlkanalanordnung zur Eckumfahrung - die sich je nach konstruktiver Ausgestaltung entweder für Außenecken oder für Innenecken eignet - nicht mehr wie beim Stand der Technik aus zwei separat in unterschiedlichen Werkzeugen zu fertigenden, verschiedenen Hälften besteht. Vielmehr setzt sich die erfindungsgemäße Hohlkanalanordnung aus zwei vollkommen identischen Hälften bzw. Hohlkanalelementen zusammen.

Diese beiden identischen Hälften bzw. Hohlkanalelemente sind dabei so ausgeführt, dass ihre Kontaktoberflächen einander gegenseitig dicht überlappen und so einen im Bereich der Kontaktoberflächen geschlossenen Hohlkanal bilden. Die Kontaktoberfläche des Hohlkanalelements ist dabei achsensymmetrisch ausgebildet, und zwar in Bezug auf diejenige Achse bzw. Gerade, die durch einen gedachten Schnitt der Ebene, die anhand der beiden Längsachsen der Kabelkanäle der beiden aneinandergrenzenden Verlegeebenen gebildet ist, sowie derjenigen Ebene, die der winkelhalbierenden Ebene zwischen den beiden Verlegeebenen entspricht, definiert ist.

Diese erfindungsgemäße Gestaltung des Hohlkanalelements hat zur Folge, dass nicht mehr unterschiedliche männliche und weibliche Hälften bzw. Hohlkanalelemente für die Eckumfahrung erforderlich sind. Vielmehr genügen nunmehr zwei identische Hälften bzw. Hohlkanalelemente, deren Kontaktflächen sich mittels Drehung um 180° um die Symmetrieachse in das jeweilige hermaphroditische Gegenstück überführen lassen.

Auf diese Weise lassen sich somit die Werkzeugkosten für das bisher erforderliche zweite unterschiedliche, weibliche bzw. männliche Gegenstück, wie auch die Kosten für die separate Erfassung und Lagerhaltung zweier verschiedener Hälften der Eckumfahrung vollkommen eliminieren.

Gemäß einer bevorzugten Ausführungsform der Erfindung weisen die beiden Hohlkanalelemente der Eckumfahrung bzw. Hohlkanalanordnung eine gemeinsame Schwenkachse auf. Die beiden Hohlkanalelemente sind dabei um die gemeinsame Schwenkachse um einen bestimmten Winkelbetrag verschwenkbar. Bei dieser Ausführungsform stimmen die Kontaktoberflächen zudem mit einem zur Schwenkachse koaxialen Rotationskörperabschnitt überein.

Auf diese Weise wird ein Hohlkanalelement für eine Hohlkanalanordnung bzw. Eckumfahrung erhalten, wobei das Hohlkanalelement einerseits bezüglich seiner Kontaktflächen wie gehabt als Zwitter bzw. hermaphroditisch ausgeführt ist, und bei dem andererseits die Kontaktflächen - auch bei Schwenkbewegungen zweier miteinander zu einer Eckumfahrung verbundener, identischer Hohlkanalelemente - dank der auf die Schwenkachse bezogenen rotationssymmetrischen Gestalt der Kontaktoberflächen stets in dicht überlappendem Kontakt miteinander stehen.

Besonders bevorzugt ist dabei die Hohlkanalanordnung für die Umfahrung einer Innen- oder Außenecke von 90° eingerichtet, wobei die beiden Hohlkanalelemente der Hohlkanalanordnung sowohl in einen Relativwinkel von kleiner als 90° als auch in einen Relativwinkel von größer als 90° verbracht werden können.

Eine solche Hohlkanalanordnung besitzt somit sowohl den erfindungsgemäßen Vorteil, nach dem nicht mehr zwei verschieden geformte, sondern lediglich noch zwei identische Hohlkanalelemente erforderlich sind. Darüberhinaus zeichnet sich diese Ausführungsform dadurch aus, dass auch Kanäle zweier verschiedener Verlegeebenen, die nicht genau den üblichen Winkel von 90° einschließen - beispielsweise aufgrund von Ungenauigkeiten am Bau - ohne Verspannungen und handwerklich sauber miteinander verbunden werden können.

Gemäß einer weiteren Ausführungsform der Erfindung sind die beiden Hohlkanalelemente der Hohlkanalanordnung mittels einer Schnappeinrichtung miteinander verbindbar. Auf diese Weise wird die Montage erleichtert und beschleunigt, und es sind ferner auch keine zusätzlichen Verbindungselemente erforderlich. Insgesamt werden hierdurch somit auch Kosten eingespart.

Besonders bevorzugt ist dabei die gegebenenfalls vorhandene Schwenkachse zwischen den beiden Hohlkanalelementen durch die Schnappeinrichtung gebildet. Auch diese Mehrfachfunktion der Schnappeinrichtung vereinfacht das Hohlkanalelement, und führt somit sowohl zu einer designerisch klareren und ansprechenderen Gestaltung der Eckumfahrung als auch zu einer Kostenreduktion beim Werkzeugbau.

Gemäß einer weiteren Ausführungsform der Erfindung weist das Hohlkanalelement kanalinnenseitig angeordnete federnde Laschen auf, die mit entsprechenden Anschlussvorsprüngen bzw. Wandungen von Anschlusselementen in klemmenden Eingriff bringbar sind. Bei den Anschlusselementen kann es sich im Fall der Anwendung der Erfindung im Bereich der Kabelkanäle insbesondere um die Enden der Kabelkanäle der jeweiligen Verlegeebenen handeln.

Besonders bevorzugt weisen die Laschen in der Einschubrichtung des Anschlusselements dabei einen Hinterschnitt auf. Dies bedeutet mit anderen Worten, dass die Laschen in ihrem Verbindungsbereich mit dem Hohlkanalelement einen größeren Abstand von der Wandung des Hohlkanalelements aufweisen, als dies im Klemmbereich der Laschen der Fall ist.

Diese Gestaltung der Laschen ermöglicht die Aufnahme von Anschlussvorsprüngen bzw. Anschlusselementen mit unterschiedlich großen Wandstärken, wie dies insbesondere bei Kabelkanälen aus unterschiedlichen Materialien wie beispielsweise PVC, Aluminium oder Stahlblech der Fall ist. Damit lässt sich die Hohlkanalanordnung bzw. Eckumfahrung besonders universell einsetzen, womit wiederum die Teilevielfalt beispielsweise von Kabelkanal-Systemen reduziert und somit Kosten eingespart werden können.

Nach einer weiteren Ausführungsform der vorliegenden Erfindung weisen die Kontaktflächen des Hohlkanalelements einen Rastvorsprung sowie eine mit dem Rastvorsprung des Hohlkanalelements - genauer gesagt mit dem Rastvorsprung des anderen Hohlkanalelements einer aus zwei Hohlkanalelementen bestehenden Hohlkanalanordnung - formkorrespondierende Rastvertiefung auf.

Beim Zusammenfügen zweier gemäß dieser Ausführungsform gestalteter Hohlkanalelemente zu einer Hohlkanalanordnung bzw. Eckumfahrung kann somit der Rastvorsprung jedes der beiden Hohlkanalelemente jeweils in die Rastvertiefung des jeweils anderen Hohlkanalelements eingreifen. Auf diese Weise lässt sich ein ungewolltes Öffnen der Hohlkanalanordnung über den vorgesehenen Schwenkwinkelbereich hinaus vermeiden, was die bequeme und sichere Handhabung und Montage der Hohlkanalanordnung erleichtert.

Bevorzugt besteht das Hohlkanalelement dabei aus einem Polymerwerkstoff, besonders bevorzugt aus einem thermoplastischen Material, wodurch sich das Hohlkanalelement bzw. die Hohlkanalanordnung vergleichsweise einfach und kostengünstig produzieren lässt.

Im Folgenden wird die Erfindung anhand lediglich Ausführungsbeispiele darstellender Zeichnungen näher erläutert.

Es zeigt:
- **Fig. 1**: in schematischer isometrischer Darstellung einen sich über drei Verlegeebenen erstreckenden Kabelkanal mit Ausführungsformen von Eckumfahrungen bzw. Hohlka- nalanordnungen gemäß der Erfindung;
- **Fig. 2**: in einer Fig. 1 entsprechenden, vergrößerten Darstellung eine Hohlkanalanordnung für Außenecken gemäß Fig. 1;
- **Fig. 3**: in einer Fig. 2 entsprechenden Darstellung eine Hohlka- nalanordnung für Innenecken gemäß Fig. 1;
- **Fig. 4**: in schematischer isometrischer Darstellung ein Hohlka- nalelement der Hohlkanalanordnung für Außenecken ge- mäß Fig. 2;
- **Fig. 5**: in einer Fig. 4 entsprechenden Darstellung ein Hohlka- nalelement der Hohlkanalanordnung für Innenecken ge- mäß Fig. 3;
- **Fig. 6**: in isometrischer Darstellung einen vergrößerten Aus- schnitt des Hohlkanalelements gemäß Fig. 4 in der Au- ßenansicht mit Darstellung der achsensymmetrischen Kontaktflächen; und
- **Fig. 7**: in einer Fig. 6 entsprechenden Darstellung das Hohlka- nalelement gemäß Fig. 5 mit Darstellung der Bezugsebe- nen für die Symmetrieachse der Kontaktflächen.

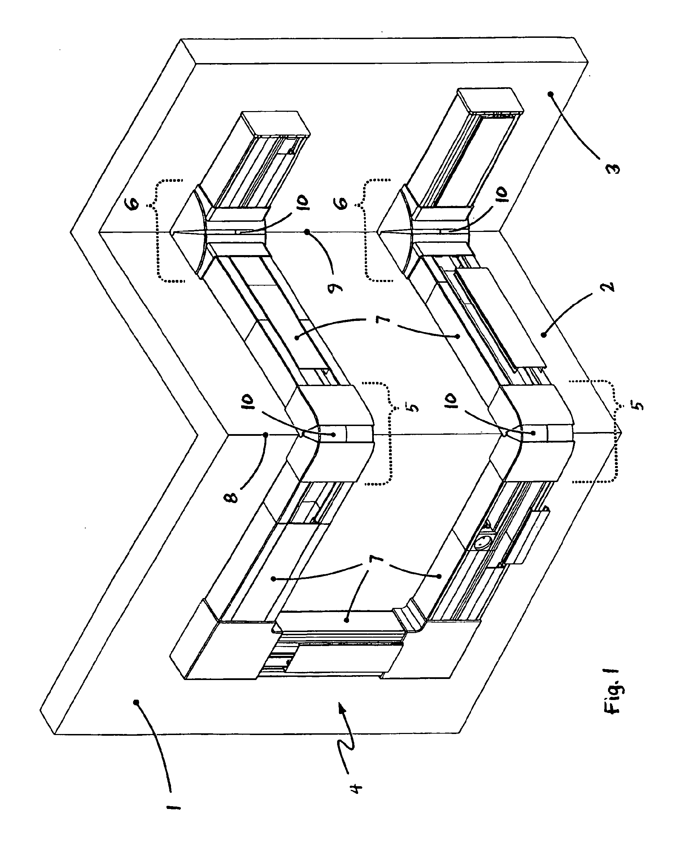

Fig. 1 zeigt in isometrischer Darstellung ein Beispiel für einen sich über drei Verlegeebenen 1, 2, 3 erstreckenden Kabelkanal 4, wobei der gezeigte Kabelkanal 4 eine Anzahl von Eckumfahrungen 5, 6 bzw. Hohlkanalanordnungen 5, 6 umfasst, die jeweils Ausführungsformen der Erfindung darstellen.

Man erkennt, dass der Kabelkanal 4 sich über mehrere aneinander angrenzende Verlegeebenen bzw. Wände 1, 2, 3 beispielsweise eines Raumes erstreckt. Die Wände 1, 2, 3 sind dabei jeweils unter einem Winkel von etwa 90° zueinander angeordnet. Auf den durch die drei Wände 1, 2, 3 gebildeten drei Verlegeebenen 1, 2, 3 sind jeweils steckbare Kabelkanalelemente 7 angeordnet. Vor dem Verschluss der Kabelkanalelemente 7 mit entsprechenden Steckdeckeln können im Inneren des Kabelkanals 4 beispielsweise elektrische Versorgungsleitungen und/oder auch weitere elektrische Installationselemente angeordnet werden.

Der Übergang zwischen zwei aneinander angrenzenden Wänden bzw. Verlegeebenen 1, 2, 3 erfolgt bei dem in **Fig. 1** dargestellten Kabelkanal 4 sowohl bei der Außenecke 8 als auch bei der Innenecke 9 mittels Eckumfahrungen 5, 6. Die dargestellten Eckumfahrungen 5, 6 stellen dabei Ausführungsformen der Hohlkanalanordnung gemäß der vorliegenden Erfindung dar.

Aus der Darstellung der **Fig. 1** geht hervor, dass es sich bei den dort eingesetzten Eckumfahrungen 5, 6 um Ausführungsformen mit einer eingebauten Schwenkachse sowie mit zur Schwenkachse koaxialen Rotationskörperabschnitten 10 handelt, die somit eine gewisse Winkeltoleranz bezüglich des Relativwinkels der beiden Hälften der jeweiligen Eckumfahrung aufweisen. Dies bedeutet mit anderen Worten, dass die Eckumfahrungen 5, 6 dank ihrer Winkelverstellbarkeit auch dann einfach, sauber und insbesondere ohne mechanische Verspannungen montiert werden können, wenn die Wände 1, 2, 3 des Raumes - beispielsweise aufgrund baulicher Ungenauigkeiten - einen Winkel aufweisen sollten, der nicht genau mit dem Standardwinkel von 90° übereinstimmt.

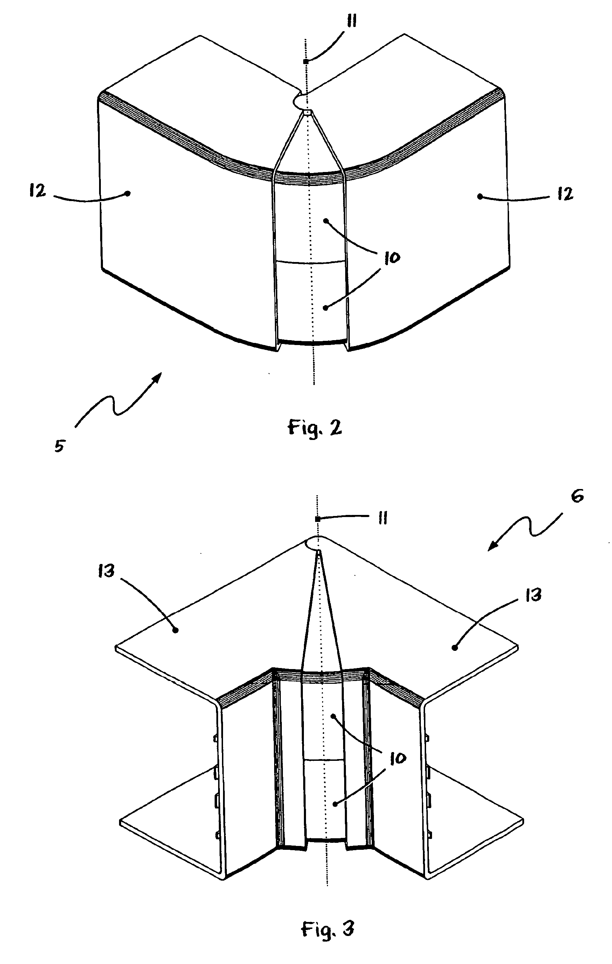

**Fig. 2** und **3** zeigen die Eckumfahrungen 5, 6 gemäß **Fig. 1** nochmals separat in vergrößerter Darstellung. Bereits hier wird der dank der Erfindung äußerst einfache und damit kostengünstig herstellbare, gleichzeitig jedoch robuste und auch designerisch ansprechende Aufbau der Eckumfahrungen 5, 6 deutlich. In **Fig. 2** und **3** ist ferner auch bereits die Schwenkachse 11 angedeutet (mittels strichlierter Linien), um die sich die beiden identischen Hälften 12, 13, aus denen sich die Eckumfahrungen 5, 6 gemäß **Fig. 2** und **3** jeweils zusammensetzen, um einen gewissen Winkelbeitrag beidseitig des Standardwinkels von 90° gegeneinander schwenken lassen.

Auch der zur Schwenkachse 11 koaxiale Rotationskörperabschnitt 10, der trotz der Winkelverstellbarkeit einer aus den dargestellten Hohlkanalelementen 12, 13 gebildeten Eckumfahrung 5, 6 einen stets dichten Abschluss und eine geschlossene Oberfläche der Eckumfahrung 5, 6 nach außen sicherstellt, ist in den **Fig. 2** und **3** bereits gut zu erkennen.

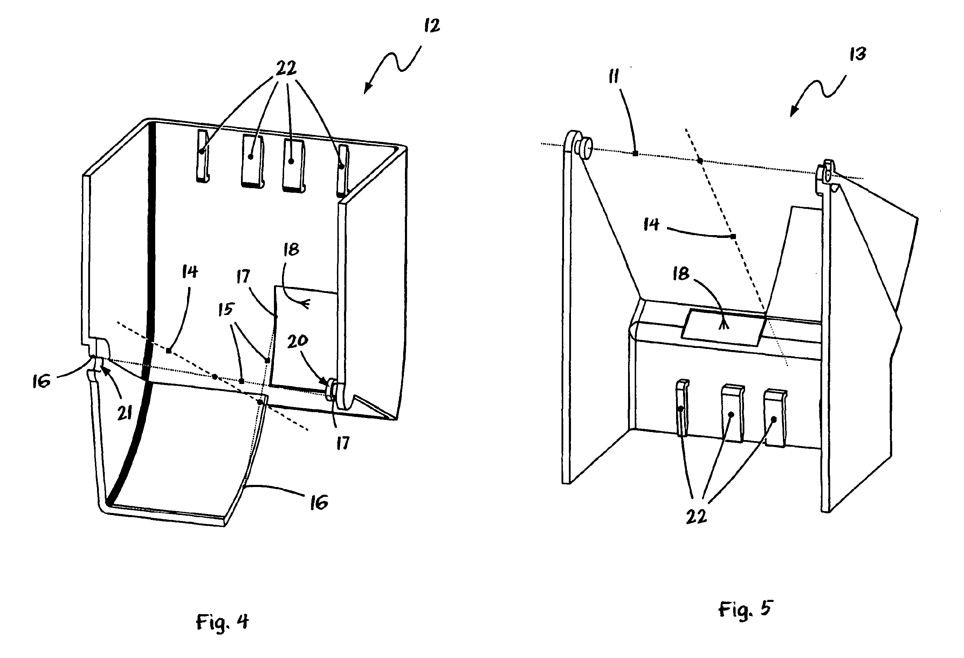

In den **Fig. 4** und **5** ist jeweils eine der beiden identischen Hälften 12, 13 bzw. Hohlkanalelemente 12, 13 der Eckumfahrungen 5, 6 gemäß **Fig. 2** und **3** weiter vergrößert, sowie von der Innenseite her gesehen dargestellt.

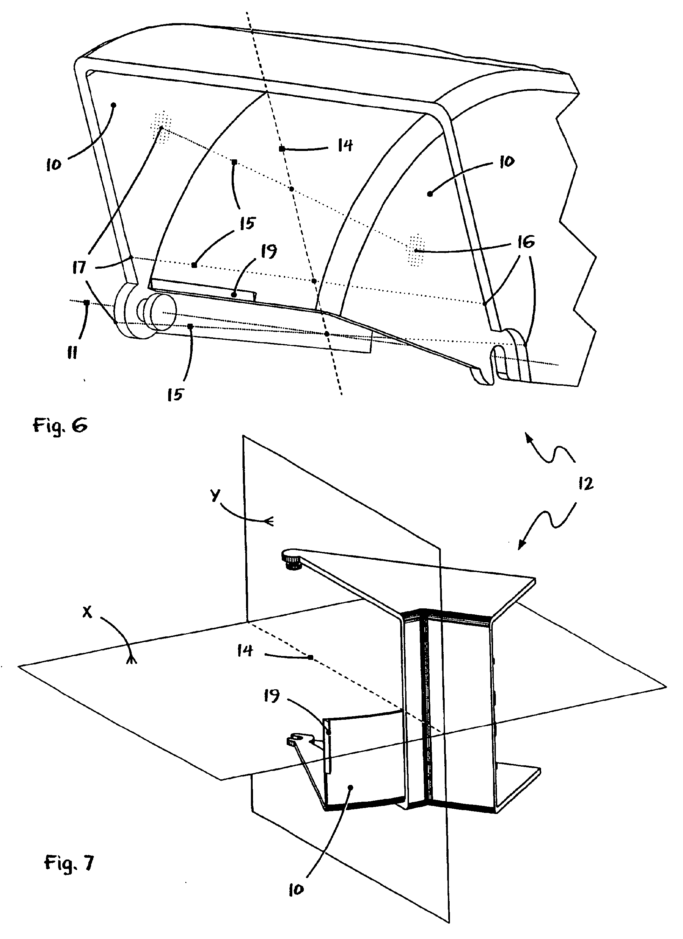

In **Fig. 4** und **5** ist ferner auch jeweils eine Symmetrieachse 14 (strichlierte Linie) der Kontaktflächen des jeweiligen Hohlkanalelements 12, 13 eingezeichnet. Anhand der weiteren in **Fig. 4** eingezeichneten punktierten Hilfslinien 15 (siehe auch **Fig. 6**) wird zudem erkennbar, dass die Kontaktflächen des Hohlkanalelements 12 - also diejenigen Flächen der beiden Hohlkanalelemente 12, die beim Zusammenbau zweier Hohlkanalelemente 12 zu einer Eckumfahrung 5 miteinander in Kontakt stehen können - achsensymmetrisch zu der eingezeichneten Symmetrieachse 14 aufgebaut sind.

Diese Achsensymmetrie bedeutet mit anderen Worten, dass es für jeden Punkt 16 der Kontaktfläche eines Hohlkanalelements 12 einen an der Symmetrieachse gespiegelten, gegenüberliegenden Punkt 17 gibt, der ebenfalls auf der Kontaktoberfläche liegt. Auf diese Weise wird die hermaphroditische Gestalt der Kontaktfläche sichergestellt, und es wird ermöglicht, dass zwei identische Hohlkanalelemente 12, 13 zu einer Eckumfahrung 5, 6 zusammengefügt werden können.

In den **Fig. 4** und **5** ferner zu erkennen ist die Rastvertiefung **18,** die für den Eingriff des Rastvorsprungs 19 (siehe **Fig. 6** und **7**) vorgesehen ist.

Überdies zeigen **Fig. 4** und **5** die aus einem schraubenkopfartigen Achsstummel 20 und einer formkorrespondierend zum Achsstummel 20 ausgebildeten Rastgabel 21 gebildete Schnappeinrichtung. Die Schnappeinrichtung 20, 21 dient einerseits der einfachen Verbindung zweier Hohlkanalelemente 12, 13 durch Einrasten jeweils des Achsstummels 20 in der Rastgabel 21 des gegenüberliegenden Hohlkanalelements 12, 13. Andererseits wird bei der gezeigten Ausführungsformen durch die Schnappeinrichtung 20, 21 gleichzeitig die Schwenkachse 11 (siehe **Fig. 5**) gebildet, um die sich zwei zu einer Hohlkanalanordnung 5, 6 zusammengesteckte Hohlkanalelemente 12, 13 gegeneinander um einen bestimmten Winkelbetrag verschwenken lassen.

Schließlich sind in **Fig. 4** und **5** auch die federnden Laschen 22 erkennbar, mittels derer sich das Hohlkanalelement 12, 13, bzw. die Hohlkanalanordnung oder Eckumfahrung 5, 6 einfach und zuverlässig mit jeweils angrenzenden Kabelkanal-Elementen 7 (siehe **Fig. 1**) verbinden lassen. Da eine Mehrzahl an spezifisch verteilt angeordneten Laschen 22 vorhanden ist, und da die Laschen 22 in Bezug auf die Einschubrichtung eines Anschlussstückes 7 einen Hinterschnitt aufweisen, sind die Hohlkanalelemente 12, 13, bzw. eine daraus gebildete Eckumfahrung 5, 6 universell mit einer Vielzahl an unterschiedlichen Kabelkanal-Systembauteilen 7 verbindbar, insbesondere auch dann, wenn verschiedene Anschlussbauteile 7 aus unterschiedlichen Materialien bestehen und/oder unterschiedliche Wandstärken aufweisen sollten.

**Fig. 6** zeigt einen vergrößerten Ausschnitt des Hohlkanalelements 12 gemäß **Fig. 4****,** hier wieder in der Außenansicht, ebenfalls mit der schematischen Verdeutlichung der achsensymmetrisch aufgebauten Kontaktflächen, anhand der punktierten Hilfslinien 15. Die Schwenkachse 11 ist hier ebenfalls eingezeichnet. Auch hier wird wieder deutlich, dass es für jeden Punkt 16 der Kontaktfläche des Hohlkanalelements 12 einen an der (strichliert dargestellten) Symmetrieachse 14 gespiegelten, gegenüberliegenden Punkt 17 gibt, der ebenfalls auf der Kontaktoberfläche liegt.

Aus **Fig. 7** schließlich geht die Definition der Lage der Symmetrieachse 14 des hier beispielhaft herangezogenen Hohlkanalelements 12 gemäß **Fig. 4** hervor. Die Symmetrieachse 14, die die Achsensymmetrie der Kontaktfläche des Hohlkanalelements 12 bestimmt, ergibt sich als Schnittlinie 14 der beiden in **Fig. 7** angedeuteten, gedachten Ebenen X und Y. Bei diesen Ebenen X und Y handelt es sich zum einen um diejenige Ebene X, die durch die Längsachsen der Kabelkanäle der beiden - hier im Bereich der Außenecke 8 - aneinandergrenzenden Wände 1, 2, 3 bzw. Verlegeebenen 1, 2, 3 definiert ist, sowie zum anderen um diejenige Ebene Y, die der winkelhalbierenden Ebene Y zwischen den beiden Wänden 1, 2, 3 bzw. Verlegeebenen 1, 2, 3 im Bereich der Außenecke 8 entspricht.

Ist das Hohlkanalelement 12 bezüglich der durch diese beide Ebenen X, Y definierten Schnittlinie 14 achsensymmetrisch, so ist gewährleistet, dass sich eine Eckumfahrung 5 aus zwei derartigen identischen Hohlkanalelementen 12 bilden lässt.

Ferner zeigen **Fig. 6** und **7** auch den an der Kontaktfläche bzw. im Bereich des Rotationskörperabschnitts 10 angeordneten Rastvorsprung 19, der zum Eingriff in die in **Fig. 4** und **5** erkennbare Rastvertiefung 18 vorgesehen ist.

Beim Zusammenfügen der Hohlkanalelemente 12 mit Rastvorsprung 19 und Rastvertiefung 18 zu einer Hohlkanalanordnung 5 bzw. zu einer Eckumfahrung 5 kann somit der Rastvorsprung 19 jedes der beiden Hohlkanalelemente 12 in die Rastvertiefung 18 des jeweils anderen Hohlkanalelements 12 eingreifen. Auf diese Weise lässt sich ungewolltes Öffnen der Hohlkanalanordnung 5 über den vorgesehenen Schwenkwinkelbereich hinaus unterbinden, wodurch die bequeme und sichere Handhabung und Montage der Hohlkanalanordnung 5 erleichtert wird.

Im Ergebnis wird somit deutlich, dass dank der Erfindung eine einfach aufgebaute, robuste Hohlkanalanordnung bzw. Eckumfahrung - insbesondere für Kabelkanalsysteme - geschaffen wird. Aufgrund der speziellen, erfindungsgemäßen Gestaltung der Kontaktoberflächen der Hohlkanalelemente kann eine Eckumfahrung aus lediglich zwei identischen Hohlkanalelementen gebildet werden. Hierdurch wird nicht nur Montage und Lagerhaltung vereinfacht, sondern es werden auch nicht unerhebliche Produktions- und Werkzeugkosten eingespart.

## Patentansprüche

1. Hohlkanalanordnung (5, 6) zur Eckumfahrung, insbesondere als Bestandteil eines Kabelkanal-Systems, wobei die Hohlkanalanordnung (5, 6) zwei identische, jeweils im Bereich ihrer Kontaktoberflächen aneinander dicht überlappend zur Anlage bringbare Hohlkanalelemente (12, 13) umfasst, wobei die Kontaktoberfläche des Hohlkanalelements (12, 13) Achsensymmetrie (14, 15, 16, 17) aufweist, **dadurch gekennzeichnet,**
**dass** das Hohlkanalelement (12, 13) einstückig ausgebildet ist, und die Hohlkanalanordnung (5, 6) mit den zwei Hohlkanalelementen (12; 13) ausbildbar ist.

2. Hohlkanalanordnung nach Anspruch 1,
**dadurch gekennzeichnet,**
**dass** die beiden Hohlkanalelemente (12, 13) der Hohlkanalanordnung (5, 6) eine gemeinsame Schwenkachse (11) aufweisen, um welche sie gegeneinander verschwenkbar sind, wobei die Kontaktoberflächen mit einem zur Schwenkachse (11) koaxialen Rotationskörperabschnitt (10) übereinstimmen.

3. Hohlkanalanordnung nach Anspruch 2,
**dadurch gekennzeichnet,**
**dass** die Hohlkanalanordnung (5, 6) für eine Eckumfahrung von 90° eingerichtet ist, wobei die beiden Hohlkanalelemente (12, 13) der Hohlkanalanordnung (5, 6) sowohl in einen Relativwinkel von kleiner als 90°, als auch in einen Relativwinkel von größer als 90° verbringbar sind.

4. Hohlkanalanordnung nach einem der Ansprüche 1 bis 3,
**dadurch gekennzeichnet,**
**dass** die beiden Hohlkanalelemente (12, 13) der Hohlkanalanordnung (5, 6) mittels Schnappeinrichtung (20, 21) miteinander verbindbar sind.

5. Hohlkanalanordnung nach Anspruch 2 und 4,
**dadurch gekennzeichnet,**
**dass** die Schwenkachse (11) durch die Schnappeinrichtung (20, 21) definiert ist.

6. Hohlkanalanordnung nach einem der Ansprüche 1 bis 5,
**dadurch gekennzeichnet,**
**dass** das Hohlkanalelement (12, 13) kanalinnenseitig angeordnete federnde Laschen (22) aufweist, die mit Anschlussvorsprüngen von Anschlusselementen (7) in klemmenden Eingriff bringbar sind.

7. Hohlkanalanordnung nach Anspruch 6,
**dadurch gekennzeichnet,**
**dass** die Laschen (22) in Einschubrichtung des Anschlusselements (7) einen Hinterschnitt aufweisen.

8. Hohlkanalanordnung nach einem der Ansprüche 2 bis 7,
**dadurch gekennzeichnet,**
**dass** die Kontaktflächen des Hohlkanalelements (12, 13) einen Rastvorsprung (19) und eine mit dem Rastvorsprung (19) formkorrespondierende Rastvertiefung (18) zur Begrenzung des Schwenkwinkels zwischen zwei Hohlkanalelementen (12, 13) aufweisen.

9. Hohlkanalanordnung nach einem der Ansprüche 1 bis 8,
**dadurch gekennzeichnet,**
**dass** das Hohlkanalelement (12, 13) aus einem Polymerwerkstoff, insbesondere aus einem Thermoplastwerkstoff besteht.

## Claims

1. A hollow conduit arrangement (5, 6) for turning a corner, in particular as a component of a cable conduit system, wherein
the hollow conduit arrangement (5, 6) comprises two identical hollow conduit elements (12, 13), which in each case can be brought into contact in the region of their contact surfaces, overlapping one another in a sealed manner, wherein
the contact surface of the hollow conduit element (12, 13) has axial symmetry (14, 15, 16, 17),
**characterised in that** the hollow conduit element (12, 13) is designed in one piece, and the hollow conduit arrangement (5, 6) can be designed with the two hollow conduit elements (12, 13).

2. The hollow conduit arrangement according to claim 1,
**characterised in that** the two hollow conduit elements (12, 13) of the hollow conduit arrangement (5, 6) have a common pivotal axis, about which they can be pivoted relative to one another, wherein
the contact surfaces match up to a body of rotation section (10) coaxial with the pivotal axis (11).

3. The hollow conduit arrangement according to claim 2,
**characterised in that** the hollow conduit arrangement (5, 6) is equipped for turning a corner of 90°, wherein
the two hollow conduit elements (12, 13) of the hollow conduit arrangement (5, 6) can be brought into contact at a relative angle of less than 90°, and also at a relative angle of more than 90°.

4. The hollow conduit arrangement according to one of the claims 1 to 3,
**characterised in that** the two hollow conduit elements (12, 13) of the hollow conduit arrangement (5, 6) can be connected with one another by means of a snap-action device (20, 21).

5. The hollow conduit arrangement according to claims 2 and 4,
**characterised in that** the pivotal axis (11) is defined by the snap-action device (20, 21).

6. The hollow conduit arrangement according to one of the claims 1 to 5,
**characterised in that** the hollow conduit element (12, 13) has sprung tabs (22) arranged on the inner face of the conduit, which can be brought into clamping engagement with connecting projections of connecting elements (7).

7. The hollow conduit arrangement according to claim 6, **characterised in that** the tabs (22) have an undercut in the direction of insertion of the connecting element (7).

8. The hollow conduit arrangement according to one of the claims 2 to 7,
**characterised in that** the contact surfaces of the hollow conduit element (12, 13) have a latching projection (19) and a latching depression (18) corresponding in shape with the latching projection (19), to limit the angle of pivot between two hollow conduit elements (12, 13).

9. The hollow conduit arrangement according to one of the claims 1 to 8,
**characterised in that** the hollow conduit element (12, 13) consists of a polymer material, in particular of a thermoplastic material.

## Revendications

1. Agencement de canal creux (5, 6) pour le contournement d'angle, en particulier comme composant d'un système de caniveau de câbles, l'agencement de canal creux (5, 6) comprenant deux éléments de canal creux (12, 13) identiques, pouvant être amenés en appui l'un sur l'autre en se chevauchant de façon étanche respectivement dans la zone de leurs surfaces de contact, la surface de contact de l'élément de canal creux (12, 13) présentant une symétrie d'axe (14, 15, 16, 17), **caractérisé en ce que** l'élément de canal creux (12, 13) est conçu d'une seule pièce, et l'agencement de canal creux (5, 6) peut être réalisé avec les deux éléments de canal creux (12, 13).

2. Agencement de canal creux selon la revendication 1, **caractérisé en ce que**
les deux éléments de canal creux (12, 13) de l' agencement de canal creux (5, 6) présentent un axe de pivotement (11) commun autour duquel ils peuvent basculer l'un par rapport à l'autre, les surfaces de contact coïncidant avec une partie du corps de rotation (10) coaxiale par rapport à l'axe de pivotement (11),

3. Agencement de canal creux selon la revendication 2, **caractérisé en ce que**
l'agencement de canal creux (5, 6) est aménagé pour un contour d'angle de 90°, les deux éléments de canal creux (12, 13) de l'agencement de canal creux (5, 6) pouvant être amenés aussi bien dans un angle relatif inférieur à 90° que dans un angle relatif supérieur à 90°.

4. Agencement de canal creux selon l'une quelconque des revendications 1 à 3,
**caractérisé en ce que**
les deux éléments de canal creux (12, 13) de l'agencement de canal creux (5, 6) peuvent être reliés l'un à l'autre au moyen d'un dispositif à encliquetage (20, 21).

5. Agencement de canal creux selon les revendications 2 et 4,
**caractérisé en ce que**
l'axe de pivotement (11) est défini par le dispositif d'encliquetage (20, 21).

6. Agencement de canal creux selon l'une quelconque des revendications 1 à 5,
**caractérisé en ce que**
l'élément de canal creux (12, 13) présente des languettes (22), montées sur ressort, disposées côté intérieur du canal, qui peuvent être mises en prise par serrage avec des saillies de raccordement d'éléments de raccordement (7).

7. Agencement de canal creux selon la revendication 6,
**caractérisé en ce que**
les languettes (22) présentent une contre-dépouille dans le sens d'introduction de l'élément de raccordement (7).

8. Agencement de canal creux selon l'une quelconque des revendications 2 à 7,
**caractérisé en ce que**
les surfaces de contact de l'élément de canal creux (12, 13) présentent une saillie de blocage (19) et un creux de blocage (19) correspondant au niveau de la forme avec la saillie de blocage (18) pour la limitation de l'angle de pivotement entre deux éléments de canal creux (12, 13).

9. Agencement de canal creux selon l'une quelconque des revendications 1 à 8,
**caractérisé en ce que**
l'élément de canal creux (12, 13) est à base d'un matériau polymère, en particulier un matériau thermoplastique.
